# FASCICULE DE BREVET EUROPEEN

(11) **EP 1 242 153 B1**
(45) Date de publication et mention de la délivrance du brevet: **01.10.2003**
(21) Numéro de dépôt: 00988934.6
(22) Date de dépôt: 15.12.2000
(51) Int. Cl.: B01D 11/02, B01D 11/04, B01D 29/66

(54) **PROCEDE ET DISPOSITIF DE CAPTAGE DE FINES PARTICULES PAR PIEGEAGE AU SEIN D'UN MELANGE SOLIDE DE TYPE NEIGE CARBONIQUE**
VERFAHREN UND VORRICHTUNG ZUM EINSCHLIESSEN VON FEINTEILIGEN FESTSTOFFEN IN EINER FESTSTOFFMISCHUNG VOM KOHLENDIOXIDSCHNEE-TYP
METHOD AND DEVICE FOR CAPTURING FINE PARTICLES BY TRAPPING IN A SOLID MIXTURE OF CARBON DIOXIDE SNOW TYPE

(30) Priorité: 15.12.1999 FR 9915832
(43) Date de publication de la demande: 25.09.2002
(73) Titulaire: Separex Société Anonyme, 54250 Champigneulles (FR)
(72) Inventeur: PERRUT, Michel, F-54000 Nancy (FR)
(74) Mandataire: Puiroux, Guy
(86) Numéro de dépôt international: FR0003557
(87) Numéro de publication internationale: WO01043845

(56) Documents cités:
- EP-A- 0 616 838
- EP-A- 0 661 091
- US-A- 4 734 451
- US-A- 5 252 224
- US-A- 5 355 901

## Description

La présente invention concerne un procédé permettant d'assurer le captage de particules solides de grande finesse, ainsi qu'un dispositif permettant de mettre en oeuvre ce procédé.

De nombreuses industries utilisent des solides sous forme pulvérulente. C'est en particulier le cas des industries fabriquant des peintures, des produits cosmétiques et dermatologiques, et des produits pharmaceutiques. Ainsi, l'industrie pharmaceutique, mais également l'industrie des cosmétiques, requiert de nouvelles formes galéniques afin d'améliorer le service rendu par les molécules d'intérêt thérapeutique ou dermatologique. En particulier, elle recherche les moyens de réaliser une dissolution rapide de ces molécules, qui se présentent sous forme de poudre solide dans les conditions habituelles, au sein des fluides biologiques tels que le sang ou la lymphe. Pour ce faire, il est nécessaire soit de modifier la morphologie du solide, soit de diminuer très fortement la granulométrie de la poudre, soit de combiner ces deux actions. De nombreux travaux sont également conduits en vue d'élaborer des médicaments complexes permettant une absorption lente et régulière de la molécule active (médicament-retard).

On sait, par de nombreux brevets et publications scientifiques, que l'on peut obtenir des microparticules, d'une granulométrie généralement comprise entre 1mm et 10mm, et des nanoparticules d'une granulométrie généralement comprise entre 0,1mm et 1mm, en utilisant différents procédés de broyage ou de précipitation dont en particulier ceux mettant en oeuvre des fluides supercritiques, les particules ainsi générées se trouvant alors dispersées soit dans une phase liquide, soit dans une phase gazeuse comprimée ou non, soit dans un fluide supercritique. Le captage de ces particules est une opération toujours difficile, quel que soit le milieu au sein duquel elles sont dispersées.

Les fluides supercritiques, et particulièrement le dioxyde de carbone supercritique, sont largement utilisés pour réaliser des poudres très fines susceptibles de se dissoudre très rapidement par ingestion par les voies respiratoires. Les fluides supercritiques sont également utilisés pour obtenir des particules complexes constituées de mélanges de différentes morphologies du principe actif et d'un excipient, tel que des microsphères ou des microcapsules.

On rappellera tout d'abord ce qu'est un tel fluide supercritique.

On sait en effet que les corps sont généralement connus sous trois états, à savoir solide, liquide ou gazeux et que l'on passe de l'un à l'autre en faisant varier la température et/ou la pression. Or il existe un point au-delà duquel on peut passer de l'état liquide à l'état de gaz ou de vapeur sans passer par une ébullition ou, à l'inverse, par une condensation, mais de façon continue : ce point est appelé le point critique.

On sait également qu'un fluide en état supercritique, c'est-à-dire un fluide qui est dans un état caractérisé soit par une pression et une température respectivement supérieures à la pression et à la température critiques dans le cas d'un corps pur, soit par un point représentatif (pression, température) situé au-delà de l'enveloppe des points critiques représentés sur un diagramme (pression, température) dans le cas d'un mélange, présente, pour de très nombreuses substances, un pouvoir solvant élevé sans commune mesure avec celui observé dans ce même fluide à l'état de gaz comprimé. Il en est de même des liquides dits « subcritiques », c'est-à-dire des liquides qui se trouvent dans un état caractérisé soit par une pression supérieure à la pression critique et par une température inférieure à la température critique dans le cas d'un corps pur, soit par une pression supérieure aux pressions critiques et une température inférieure aux températures critiques des composants dans le cas d'un mélange (cf Michel PERRUT - Les Techniques de l'Ingénieur « Extraction par fluide supercritique, J 2 770 - 1 à 12, 1999 »).

Les variations importantes et modulables du pouvoir solvant des fluides supercritiques sont d'ailleurs utilisées dans de nombreux procédés d'extraction (solide/fluide), de fractionnement (liquide/fluide), de chromatographie analytique ou préparative, de traitement des matériaux (céramiques, polymères) et de génération de particules. Des réactions chimiques ou biochimiques sont également réalisées dans de tels solvants. I1 est à noter que les propriétés physico-chimiques du dioxyde de carbone ainsi que ses paramètres critiques (pression critique : 7,4 MPa et température critique : 31°C) en font le solvant préféré dans de nombreuses applications, d'autant qu'il ne présente pas de toxicité et est disponible à très bas prix en très grande quantité. Solvant non polaire, le dioxyde de carbone porté à pression supercritique est parfois additionné d'un co-solvant, constitué notamment par un solvant organique polaire qui a pour fonction de modifier le pouvoir solvant de façon notable, surtout vis-à-vis de molécules présentant une certaine polarité, l'éthanol étant souvent utilisé à cette fin. Toutefois, certains composés sont plus favorablement extraits par un hydrocarbure léger ayant de 2 à 5 atomes de carbone, et plus favorablement, de 2 à 4 atomes de carbone, à pression supercritique.

Parmi les procédés permettant d'obtenir de très fines particules au moyen d'un fluide à pression supercritique, on retiendra particulièrement le procédé connu sous 1a désignation de "RESS" et suivant lequel on détend très rapidement une solution d'un produit à atomiser dans un fluide supercritique, et le procédé anti-solvant du type des procédés dits « SAS », « SEDS », « PCA » , « ASES », consistant à pulvériser une solution du produit dans un solvant organique ou aqueux au sein d'un courant de fluide en état supercritique.

Ces procédés permettent l'obtention d'une poudre formée de particules très fines qui sont dispersées au sein d'un courant gazeux à faible pression (procédé RESS) ou à pression élevée (procédé SAS). D'autres procédés connus dans l'état antérieur de la technique permettent également de générer des particules très fines au sein d'un liquide, par précipitation, par recristallisation ou par action mécanique de broyage.

La collecte de ces particules est ensuite une opération très délicate, surtout lorsque l'on souhaite mettre en oeuvre des productions importantes.

On connaît bien entendu diverses méthodes permettant de collecter de fines particules au sein d'un courant liquide ou gazeux. Les plus couramment utilisées sont celles mettant en oeuvre des filtres constitués de matériaux filtrants tissés ou non tissés qui permettent de capter les particules les plus fines y compris celles dont le diamètre est compris entre 0,1 µm et 1 mm.

Les filtres présentent aussi un inconvénient notoire, dans la mesure où la récupération des particules qu'ils ont fixées ainsi que leur réutilisation ultérieure éventuelle, sont des opérations particulièrement difficiles à effectuer dès lors que l'on souhaite respecter les règles imposées dans l'industrie pharmaceutique.

La présente invention a pour but de proposer un procédé, ainsi que des moyens de mise en oeuvre de ce procédé, permettant de capter facilement de telles particules et qui, de plus, se prêtent à un fonctionnement en continu à l'échelle industrielle.

La présente invention a ainsi pour objet un procédé de captage de très fines particules en présence dans un flux de fluide à l'état liquide, gazeux ou supercritique caractérisé en ce qu'il comporte les étapes consistant à :
- faire passer ce flux à travers un élément de filtration,
- stopper l'émission de ce flux,
- balayer, à contre-courant, le matériau filtrant avec un flux de dioxyde de carbone sous pression, de façon à entraîner les particules déposées sur le matériau filtrant,
- détendre le flux à contre-courant, de façon à piéger les particules au sein d'un mélange solide, de type neige carbonique, formé au cours de la détente.

Le flux de dioxyde de carbone utilisé lors du balayage sera notamment à une pression supercritique. Par ailleurs, on pourra, de façon intéressante, refroidir, avant la détente, le flux de dioxyde de carbone circulant à contre-courant, de façon à augmenter la quantité de solide de type neige carbonique générée lors de la détente ultérieure.

Dans un mode de mise en oeuvre de l'invention dans lequel les particules auront été générées à l'aide d'un procédé mettant en oeuvre un solvant organique, notamment de type anti-solvant, on percolera, dans le sens normal du flux, les particules collectées par l'élément de filtration avec un fluide à pression supercritique, avant d'effectuer le balayage à contre-courant, afin d'éliminer le solvant présent sur et dans les particules.

Par une simple évaporation du mélange solide l'invention permet d'obtenir facilement une poudre sèche et non agglomérée.

L'invention est intéressante également sur le plan industriel, car elle permet d'envoyer successivement, de façon périodique, le flux de fluide au sein duquel les particules sont dispersées vers plusieurs chambres de captage, l'opération de production de particules étant quant à elle menée de façon continue.

La présente invention a également pour objet un dispositif de captage pour fines particules contenues au sein d'un flux de fluide liquide, gazeux ou supercritique, caractérisé en ce qu'il comprend :
- au moins une enceinte de captage comportant des moyens d'admission dudit flux,
- des moyens de réception des particules contenues dans le flux,
- des moyens d'injection dans l'enceinte de captage, au travers des moyens de réception, d'un flux de dioxyde de carbone sous pression à contre-courant du flux précédent,
- des moyens de mise en communication de l'enceinte de captage avec une enceinte réceptrice avec interposition de moyens permettant d'effectuer une détente du flux à contre courant, dans l'enceinte réceptrice.

Le dispositif de captage pourra comporter plusieurs enceintes de captage et des moyens de commutation permettant de relier tour à tour chacune de ces enceintes à des moyens de production de particules.

Les moyens de réception des particules pourront être constitués d'éléments de filtration comprenant par exemple, en allant dans le sens normal du flux, un disque en métal perforé, un filtre en microfibres et un disque en matière frittée de plus forte porosité.

On décrira ci-après, à titre d'exemple non limitatif, des formes d'exécution de la présente invention, en référence au dessin annexé sur lequel :
La figure 1 est un schéma de principe d'une installation de production de particules et d'un dispositif de captage suivant l'invention.
La figure 2 est un schéma montrant le détail des moyens de captage des particules mis en oeuvre dans l'installation représentée sur la figure 1.
La figure 3 est un schéma partiel montrant une variante de mise en oeuvre de moyens de captage suivant l'invention.

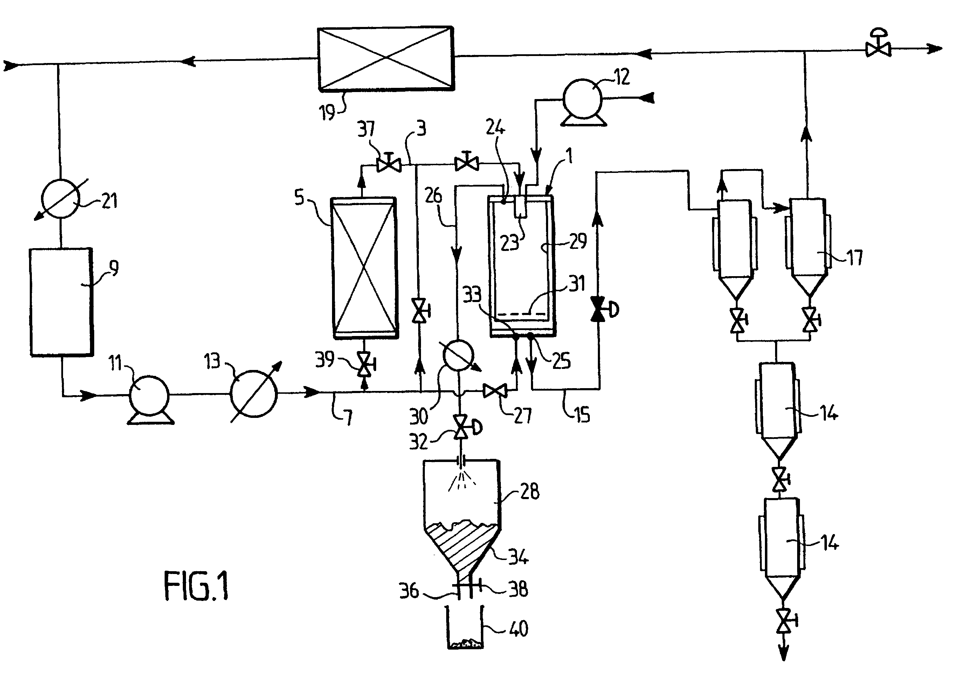

On a représenté sur la figure 1 une installation de production et un dispositif de captage de particules extra fines suivant l'invention, qui est en mesure de fonctionner notamment suivant deux modes, à savoir un mode de production dit anti-solvant et un mode de production dit RESS.

L'installation comprend une chambre d'atomisation 1, formée d'une enceinte tubulaire résistant à la pression dont la partie supérieure comprend une buse d'injection 23 et qui contient un panier cylindrique 29 dont le fond est formé par des éléments de filtrage 31 constitués d'un disque à forte porosité en métal fritté (de l'ordre de 50 µm) et d'un disque support en métal perforé entre lesquels est disposé un matériau filtrant à très faible porosité (de l'ordre de 1,2 µm).

La partie supérieure de la chambre d'atomisation 1 est alimentée en dioxyde de carbone à pression supercritique par la buse 23 reliée à une canalisation 7 en communication avec un réservoir de stockage 9 par l'intermédiaire d'une pompe à membrane 11, d'un échangeur 13, et d'une vanne 27 et la partie inférieure de cette chambre est reliée par une canalisation 15 à des séparateurs cycloniques 17, dont la partie supérieure est en communication avec le réservoir de stockage 9 par l'intermédiaire d'un lit d'absorbant 19 et d'un condenseur 21 et la partie inférieure est reliée à des moyens de soutirage 14. La chambre d'atomisation 1 peut également être alimentée en dioxyde de carbone sous pression par une entrée 33 située à sa partie inférieure.

Lorsque l'installation fonctionne en mode de génération des particules dit anti-solvant, la buse 23 est directement alimentée par la canalisation 7. Dans ce mode de mise en oeuvre une solution dans un solvant organique ou aqueux du produit à atomiser est envoyée dans la buse de pulvérisation 23 par une pompe 12.

Lorsque l'installation fonctionne en mode de génération des particules dit RESS la canalisation 7 alimente par sa base en fluide à pression supercritique un extracteur 5 dont la sortie supérieure alimente par une canalisation 3 la buse 23.

La chambre d'atomisation 1 comporte une sortie 24 qui est reliée à des moyens de captage des particules. Ces moyens de captage sont constitués par une canalisation 26 qui est reliée à une enceinte réceptrice 28 de grand volume, avec interposition d'un échangeur de chaleur 30 et d'une vanne de régulation 32. L'enceinte réceptrice 28 comporte un fond conique 34 qui s'ouvre sur une canalisation 36 dont le passage est contrôlé par une vanne 38.

On décrira tout d'abord le fonctionnement global de l'installation, puis le fonctionnement spécifique des moyens de captage des particules.

Si l'installation fonctionne suivant la technique RESS, le produit que l'on souhaite atomiser est disposé dans l'extracteur 5 et l'on fait percoler dans celui-ci un fluide à pression supercritique, constitué notamment par du dioxyde de carbone, qui est stocké dans le réservoir 9. Le fluide est porté à la pression de travail par la pompe à membrane 11 et à la température de travail par l'échangeur de chaleur 13. Le fluide à pression supercritique ayant dissous une certaine concentration du produit, il est admis par la canalisation 3 dans la chambre d'atomisation 1 au travers de la buse de pulvérisation 23, où il se détend, si bien que les particules générées viennent se fixer sur le matériau filtrant 31. Lorsque l'on estime que la quantité de particules déposées sur celui-ci est suffisante on stoppe la génération de particules.

On injecte ensuite, dans la chambre d'atomisation 1, par l'entrée 33, un flux de fluide à pression supercritique de façon à percoler le matériau filtrant 31 à contre courant du sens précédent, de façon à entraîner les particules déposées sur celui-ci vers sa sortie 24.

Le fluide à pression supercritique chargé de particules est refroidi à basse température à travers l'échangeur de chaleur 30 et est ensuite brusquement détendu par la vanne de régulation 32 dans l'enceinte réceptrice 28 à une pression voisine de la pression atmosphérique. I1 se transforme alors en partie en neige carbonique au sein de laquelle les particules se trouvent piégées.

Cette neige carbonique peut être facilement stockée, par tous moyens connus, dans des récipients appropriés bien isolés thermiquement. En fonction des besoins des utilisateurs, cette neige carbonique chargée en particules peut être soit transformée en glace carbonique par compression dans une presse afin d'être stockée sous un petit volume, soit stockée telle quelle pendant une courte période en fonction des besoins. Elle peut également être soumise à un lent réchauffage avec vaporisation de la neige. On constate alors que l'on obtient une poudre sèche bien dispersée sans agglomérat.

Comme il a été dit précédemment, ce procédé de captage s'applique à tout type de génération de particules et en particulier au procédé anti-solvant utilisant un fluide à pression supercritique.

Dans ce cas on n'utilise pas l'extracteur 5 qui est court-circuité par des vannes 37 et 39 et le produit que l'on souhaite atomiser est dissous dans un solvant et l'ensemble est pulvérisé dans la chambre d'atomisation 1 au moyen de la pompe 12, ainsi que représenté sur la figure 1. Dans ce mode de mise en oeuvre de l'invention on fera un strippage des particules déposées sur le matériau filtrant 31 par balayage de la chambre d'atomisation 1 avec un flux de fluide à pression supercritique de façon à entraîner le solvant adsorbé sur les particules avant d'admettre le fluide à pression supercritique à contre courant ainsi qu'exposé précédemment.

Le procédé de captage suivant l'invention est particulièrement intéressant pour tout produit thermosensible ou thermolabile et, en premier lieu, pour les produits biologiques.

Ce procédé est également intéressant sur le plan industriel dans la mesure où, contrairement aux procédés de captage de l'état antérieur de la technique il n'impose pas, pour la récupération des particules, d'ouvrir la chambre d'atomisation 1 et de manipuler les moyens de filtrage. Par ailleurs on a constaté que le fait de travailler en continu permettait d'obtenir des lots de produits très homogènes à la différence de ceux obtenus suivant l'état antérieur de la technique c'est-à-dire en fonctionnement par lot classique.

### Exemple 1

On a utilisé l'installation, précédemment décrite pour extraire de la caféine par du dioxyde de carbone à pression supercritique et générer des particules fines par détente de ce fluide selon la technique RESS. Dans ce mode de mise en oeuvre de l'invention on a utilisé une chambre d'atomisation 1 de forme cylindro-conique d'un volume de vingt litres, parfaitement isolée thermiquement par un isolant cryogénique. Cette chambre 1 était pourvue d'un panier cylindrique 29 fermée à sa base par des moyens de filtration constitués respectivement de bas en haut par un disque en métal fritté de porosité 50 µm, un filtre en microfibres de verre non tissé d'une porosité de 1,2 µm et un disque en métal perforé de trous de 2 mm de diamètre avec une portion de surface ouverte de 80%, les deux disques métalliques assurant le maintien mécanique du filtre.

L'extraction par le dioxyde de carbone a été effectuée à une pression de 30 MPa, une température de 60°C et un débit de 14 kg/h, la pression régnant dans la chambre d'atomisation 1 étant de 0,12 MPa.

On a arrêté la production de particules après 60 minutes puis on a admis à contre courant le dioxyde de carbone à pression supercritique dans la chambre d'atomisation 1 en ouvrant la vanne 27. Puis, comme décrit précédemment, le fluide a été refroidi à -5°C dans l'échangeur 30 puis détendu dans la vanne de régulation 32 pour former, dans le récipient 28, la neige carbonique. On a recueilli 4,2 kg de neige carbonique chargée de particules de caféine dans un flacon 40 ouvert à l'atmosphère, si bien qu'après évaporation lente, pendant environ 8 heures du dioxyde de carbone, on a obtenu finalement 51 grammes d'une poudre sèche de caféine. Une analyse granulométrique de cette poudre, effectuée par un procédé de granulométrie laser, a montré que 90% des particules avaient une taille particulièrement fine comprise entre 1,2 µm et 4,8 µm.

### Exemple 2

Dans un second exemple de mise en oeuvre de l'invention on a généré des particules très fines de tétracycline selon le procédé dit anti-solvant SAS. On a ainsi pulvérisé une solution de 5 % en masse de tétracycline dans la N-méthylpyrrolidone avec un débit de 0,6 kg/h dans un courant de 15 kg/h de dioxyde de carbone à pression supercritique, à savoir à une pression de 18 MPa et à une température de 45°C, et ce pendant 60 minutes.

On a procédé comme précédemment sauf que, après l'arrêt de la production des particules et avant d'inverser le flux de dioxyde de carbone à pression supercritique, on a continué à balayer avec celui-ci la chambre d'atomisation 1 pendant 15 minutes, de façon à éliminer le solvant.

On a recueilli 3,1 kg de neige carbonique dans un flacon 40 ouvert à l'atmosphère, si bien qu'après évaporation du dioxyde de carbone on a obtenu 28,2 grammes de poudre fine, sèche et non agglomérée, dont l'analyse granulométrique a montré que 90% des particules avaient une dimension comprise entre 0,7 µm et 2,4 µm. Une analyse par chromatographie en phase gazeuse a montré que la teneur en N-méthylpyrrolidone dans cette poudre était de 140 ppm.

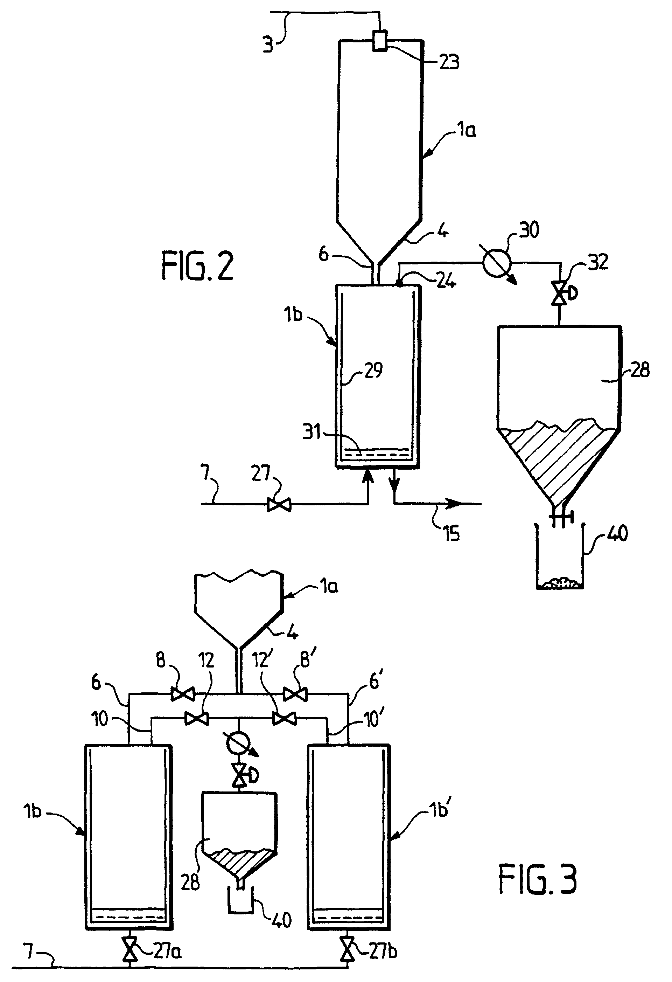

Dans un mode de mise en oeuvre de l'invention représenté sur la figure 2, on a scindé la chambre d'atomisation 1 en deux chambres distinctes, à savoir une chambre d'atomisation proprement dite 1a, où sont produites les fines particules, et une chambre de captage 1b où les fines particules produites sont captées par le matériau filtrant 31. La chambre 1a comporte un fond conique 4 et communique par celui-ci avec la partie supérieure de la chambre de captage 1b, par une canalisation 6.

Un tel mode de mise en oeuvre est particulièrement intéressant dans le domaine de l'exploitation industrielle. Il permet de travailler sur plusieurs chambres d'atomisation et plusieurs chambres de captage, qui sont utilisées et nettoyées successivement.

On a ainsi représenté sur la figure 3 un tel mode de mise en oeuvre, dans lequel la chambre d'atomisation 1a est en communication, par son fond 4, avec la partie supérieure de deux chambres de captage 1b et 1b' par des canalisations respectives 6 et 6' avec interposition de vannes 8 et 8'. L'installation comprend une enceinte réceptrice commune 28, dont la partie supérieure est respectivement en communication avec les parties supérieures des deux chambres de captage 1b et 1b' par des canalisations 10 et 10' avec interposition de vannes 12 et 12'.

En jouant sur les positions des vannes 8, 8' et 12, 12' on peut alterner, au cours du processus, celle des deux chambres réceptrices qui sera reliée à la chambre d'atomisation 1a, avec une périodicité fonction du travail à effectuer. On a utilisé une telle installation pour capter des particules de caféine. On a ainsi généré des particules pendant 4 heures, puis on a procédé comme décrit précédemment en utilisant successivement chacune des deux chambres de captage 1b et 1b' pendant des périodes de une heure. On a ainsi recueilli 17,2 kg de neige carbonique qui a fourni 251 g de caféine sous la forme d'un poudre sèche et non agglomérée dont les particules présentent une morphologie et un spectre granulométrique voisins de ceux obtenus dans l'exemple 1.

## Revendications

1. Procédé de captage de très fines particules en présence dans un flux de fluide à l'état liquide, gazeux ou supercritique **caractérisé en ce qu'**il comporte les étapes consistant à :
- faire passer ce flux à travers un élément de filtration (31),
- stopper l'émission de ce flux,
- balayer, à contre-courant, le matériau filtrant (31) avec un flux de dioxyde de carbone sous pression, de façon à entraîner les particules déposées sur le matériau filtrant (31),
- détendre le flux à contre-courant, de façon à piéger les particules au sein d'un mélange solide, de type neige carbonique, formé au cours de la détente

2. Procédé de captage suivant la revendication 1, **caractérisé en ce que** le flux de dioxyde de carbone utilisé lors du balayage est à pression supercritique.

3. Procédé de captage suivant l'une des revendications 1 ou 2 **caractérisé en ce qu'**avant la détente, on refroidit le flux de dioxyde de carbone.

4. Procédé de captage suivant l'une des revendications 1 ou 2 **caractérisé en ce que**, avant le balayage à contre courant, on percole, dans le sens normal du flux, les particules collectées par l'élément de filtration avec un fluide à pression supercritique.

5. Procédé de captage suivant l'une des revendications précédentes, **caractérisé en ce que** l'on effectue la détente du flux à contre courant à une pression voisine de la pression atmosphérique.

6. Procédé de captage suivant l'une des revendications précédentes **caractérisé en ce que** l'on évapore ledit mélange solide obtenu de façon à récupérer les particules.

7. Procédé de captage suivant l'une des revendications précédentes, **caractérisé en ce que** l'on envoie, successivement de façon périodique, le flux de fluide au sein duquel les particules sont dispersées vers plusieurs chambres de captage, l'opération de production de particules étant menée de façon continue.

8. Dispositif de captage pour fines particules contenues au sein d'un flux de fluide à l'état liquide, gazeux ou supercritique, **caractérisé en ce qu'**il comprend :
- au moins une enceinte de captage (1,1a,1b,1b') comportant des moyens d'admission dudit flux,
- des moyens de réception (31) des particules contenues dans le flux,
- des moyens d'injection permettant d'injecter dans l'enceinte de captage (1,1a,1b,1b'), au travers des moyens de réception (31), un flux de dioxyde de carbone sous pression à contre-courant du flux précédent,
- des moyens de mise en communication (24,30) de l'enceinte de captage (1,1a,1b,1b') avec une enceinte réceptrice (28) avec interposition de moyens (32) permettant d'effectuer une détente du flux à contre courant, dans l'enceinte réceptrice (28).

9. Dispositif de captage suivant la revendication 8, **caractérisé en ce qu'**il comporte plusieurs enceintes de captage (1b,1b') et des moyens de commutation (8-8',12-12') permettant de relier tour à tour chacune de ces enceintes (1b,1b') à des moyens de production de particules dans un flux de fluide à l'état gazeux, liquide ou supercritique.

10. Dispositif de captage suivant la revendication 9, **caractérisé en ce que** les moyens de réception des particules sont constitués d'éléments de filtration (31).

## Claims

1. Method for capturing very fine particles present in a fluid flux in the liquid, gaseous or supercritical state, **characterized in that** it comprises the steps consisting in:
- causing this flux to pass through a filtration element (31);
- stopping the emission of this flux;
- countercurrent sweeping the filtering material (31) with a carbon dioxide flux under pressure, so as to entrain the particles deposited on the filtering material (31);
- countercurrent expanding the flux, so as to trap the particles within a solid carbon dioxide snow-type mixture formed during the expansion.

2. Method of capturing according to Claim 1, **characterized in that** the carbon dioxide flux used during sweeping is at supercritical pressure.

3. Method of capturing according to one of Claims 1 or 2, **characterized in that**, before expansion, the carbon dioxide flux is cooled.

4. Method of capturing according to one of Claims 1 or 2, **characterized in that**, before countercurrent sweeping, one percolates, in the normal direction of the flux, the particles collected by the filtration element with a fluid at supercritical pressure.

5. Method of capturing according to one of the preceding Claims, **characterized in that** one effects expansion of the flux in countercurrent at a pressure close to atmospheric pressure.

6. Method of capturing according to one of the preceding Claims, **characterized in that** said solid mixture obtained is evaporated so as to recover the particles.

7. Method of capturing according to one of the preceding Claims, **characterized in that** the flux of fluid within which the particles are dispersed is sent successively in periodic manner towards a plurality of capture chambers, the particle producing operation being carried out continuously.

8. Device for capturing fine particles contained within a flux of liquid, gaseous or supercritical fluid, **characterized in that** it comprises:
- at least one capture chamber (1, 1a, 1b, 1b') comprising means for admission of said flux,
- means (31) for receiving the particles contained in the flux,
- injection means for injecting in the capture chamber (1, 1a, 1b 1b') through the receiving means (31), a flux of carbon dioxide under pressure in countercurrent with respect to the preceding flux,
- means (24, 30) for placing the capture chamber (1, 1a, 1b 1b') in communication with a receptor chamber (28) with the interposition of means (32) for effecting an expansion of the flux in countercurrent, in the receptor chamber (28).

9. Capture device according to Claim 8, **characterized in that** it comprises a plurality of capture chambers (1b, 1b') and commutation means (8-8', 12-12') making it possible to connect in turn each of these chambers (1b, 1b') to particle production means in a flux of fluid in the gaseous, liquid or supercritical state.

10. Capturing device according to Claim 9, **characterized in that** the means for receiving the particles are constituted by filtration elements (31).

## Patentansprüche

1. Verfahren zum Auffangen von sehr feinen Partikeln, die in einem Fluidstrom in flüssigem, gasförmigem oder superkritischem Aggregatzustand vorhanden sind,
**dadurch gekennzeichnet, dass** es folgende Schritte aufweist:
- diesen Strom ein Filterelement (31) durchströmen lassen,
- die Emission dieses Stroms anhalten,
- im Gegenstrom das Filtermaterial (31) mit einem unter Druck befindlichen Kohlendioxidstrom derart spülen, dass die auf dem Filtermaterial (31) abgelagerten Partikel mitgenommen werden,
- Reduzieren des Drucks des Stroms im Gegenstrom, derart, dass die Partikel innerhalb eines festen Gemisches vom Typ Kohlensäureschnee aufgefangen werden, welches feste Gemisch während der Druckreduktion gebildet wird.

2. Auffangverfahren nach Anspruch 1, **dadurch gekennzeichnet, dass** der während des Spülens verwendete Kohlendioxidstrom unter superkritischem Druck steht.

3. Auffangverfahren nach Anspruch 1 oder 2, **dadurch gekennzeichnet, dass** vor der Druckreduktion der Kohlendioxidstrom abgekühlt wird.

4. Auffangverfahren nach Anspruch 1 oder 2, **dadurch gekennzeichnet, dass** vor dem Spülen im Gegenstrom die Partikel in der normalen Richtung des Stroms perkoliert werden, die durch das Filterelement mit einem unter superkritischem Druck stehenden Fluid aufgefangen wurden.

5. Auffangverfahren nach einem der vorstehenden Ansprüche, **dadurch gekennzeichnet, dass** die Druckreduktion des Stroms im Gegenstrom bei einem Druck durchgeführt wird, der dem atmosphärischen Druck benachbart ist.

6. Auffangverfahren nach einem der vorstehenden Ansprüche, **dadurch gekennzeichnet, dass** das erhaltene feste Gemisch derart eingedampft wird, dass die Partikel zurückgewonnen werden.

7. Auffangverfahren nach einem der vorstehenden Ansprüche, **dadurch gekennzeichnet, dass** man periodisch aufeinanderfolgend den Fluidstrom, in welchem die Partikel dispergiert sind, in Richtung auf mehrere Auffangkammern sendet, wobei der Verfahrensschritt der Produktion von Partikeln kontinuierlich ausgeführt wird.

8. Vorrichtung zum Auffangen von feinen Partikeln, die innerhalb eines Fluidstroms in flüssigem, gasförmigem oder superkritischem Aggregatzustand enthalten sind,
**dadurch gekennzeichnet, dass** sie umfasst:
- mindestens einen Auffangbehälter (1, 1a, 1b 1b'), der Mittel zur Zufuhr des Stroms aufweist,
- Mittel (31) zur Aufnahme der in dem Strom enthaltenen Partikel,
- Injekionsmittel, die gestatten, in den Auffangbehälter (1, 1a, 1b 1b') durch Aufnahmemittel (31) hindurch einen unter Druck, im Gegenstrom des vorhergehenden Stroms befindlichen Kohlendioxidstrom zu injizieren,
- Mittel (24, 30), um den Auffangbehälter (1, 1a, 1b, 1b') mit einem Aufnahmebehälter (28) bei Zwischenschaltung von Mitteln (32) zu verbinden, die gestatten, eine Druckreduktion des Stroms im Gegenstrom im Aufnahmebehälter (28) durchzuführen.

9. Auffangvorrichtung nach Anspruch 8, **dadurch gekennzeichnet, dass** sie mehrere Auffangbehälter (1b, 1b') und Kommutationsmittel (8-8', 12-12') aufweist, die gestatten, der Reihe nach einen jeden dieser Behälter (1b 1b') mit Mitteln zur Produktion von Partikeln in einem Fluidstrom in gasförmigem, flüssigem oder superkritischem Aggregatzustand zu verbinden.

10. Auffangvorrichtung nach Anspruch 9, **dadurch gekennzeichnet, dass** die Mittel zur Aufnahme der Partikel aus Filterelementen (31) gebildet sind.
